# EUROPÄISCHE PATENTSCHRIFT

(11) **EP 4 272 544 B1**
(45) Veröffentlichungstag und Bekanntmachung des Hinweises auf die Patenterteilung: **22.04.2026**
(21) Anmeldenummer: 22171668.1
(22) Anmeldetag: 04.05.2022
(51) Int. Cl.: A01G 3/053, B25F 5/00

(54) **HANDGEFÜHRTES ARBEITSGERÄT**
MANUALLY OPERATED WORK DEVICE
OUTIL DE TRAVAIL GUIDÉ À LA MAIN

(43) Veröffentlichungstag der Anmeldung: 08.11.2023
(73) Patentinhaber: Andreas Stihl AG & Co. KG, 71336 Waiblingen (DE)
(72) Erfinder: MENZEL, Johannes, 73249 Wernau (DE); KRAFT, Lars Robert, 71634 Ludwigsburg (DE); MAIER, Matthias, 71334 Waiblingen (DE); EHRLER, Denis, 73249 Wernau (DE); MÖßINGER, Felix, 70372 Stuttgart (DE); SCHMID, Marc, 71570 Oppenweiler (DE)
(74) Vertreter: Karzel, Philipp

(56) Entgegenhaltungen:
- EP-B1- 1 733 613
- WO-A1-2019/074424
- DE-A1- 102018 000 975
- US-A1- 2018 250 804

## Beschreibung

Die Erfindung betrifft ein handgeführtes Arbeitsgerät nach dem Oberbegriff des Anspruchs 1.

Aus der DE 10 2005 016 628 A1 ist ein handgeführter Freischneider bekannt, der ein Gehäuse für einen Motor aufweist, an dem ein Handgriff angeformt ist. Das Gehäuse liegt an zwei Befestigungsstellen am Führungsrohr an. An den Befestigungsstellen können Gummihülsen vorgesehen sein. Zur Aussteifung der Gehäuseschalen des Gehäuses ist der Motor fest mit dem Gehäuse verbunden. Das Gehäuse kann insbesondere nach häufigem Einsatz des Arbeitsgeräts verschleißen.

Die DE 10 2018 000 975 A1 betrifft einen Freischneider, an dessen Führungsrohr ein Handgriff festgelegt ist. Mittels Unterteilung des Führungsrohrs in zwei starre Teilabschnitte wird die Schwingungsform des Führungsrohrs so modifiziert, dass der Schwingungsbauch der Schwingung nicht im Bereich des Hangriffs liegt. Zwischen dem starren Teilabschnitt des Führungsrohrs und dem Gehäuse ist ein Antivibrationselement angeordnet.

Aus der EP 1 733 613 B1 ist ein Freischneider mit Führungsrohr bekannt, dessen Motor in einem Gehäuse angeordnet ist, an dem der Handgriff festgelegt ist. Der Motor ist von dem Gehäuse mittels Federn vibrationsentkoppelt.

Der Erfindung liegt die Aufgabe zugrunde, ein gattungsgemäßes handgeführtes Arbeitsgerät derart weiterzubilden, dass das Arbeitsgerät eine große Langlebigkeit aufweist.

Diese Aufgabe wird durch ein handgeführtes Arbeitsgerät mit den Merkmalen des Anspruchs 1 gelöst.

Der Erfindung liegt die Erkenntnis zugrunde, dass das Gehäuse im Stand der Technik durch die Vibrationen des Motors verschleißt. Die Erfindung sieht ein zweites Antivibrationselement vor, das den Motor zumindest mittelbar vibrationsentkoppelt mit dem Gehäuse verbindet. Dadurch ist das Gehäuse vor verschleißender Übertragung von Vibrationen des Motors auf das Gehäuse geschützt. In der Folge weist das handgeführte Arbeitsgerät eine große Langlebigkeit auf. Insbesondere ist der Motor ausschließlich über Antivibrationselemente mit dem Gehäuse verbunden. Dadurch ist sichergestellt, dass Vibrationen vom Motor nur gedämpft oder gar nicht auf das Gehäuse übertragen werden können. Wenn nur ein Antivibrationselement vorgesehen wäre, müsste dieses eine große Härte aufweisen, um die Relativlage von Führungsrohr und Gehäuse in der nötigen Toleranz gewährleisten zu können. Bei zu geringer Härte eines einzigen Antivibrationselements würde das Gehäuse gegenüber dem Führungsrohr stark abknicken und unter Umständen Schaden nehmen. Bei zu großer Härte eines einzigen Antivibrationselements ist der Dämpfungseffekt nur sehr gering und vom Motor beispielsweise über das Führungsrohr und das Dämpfungselement auf das Gehäuse übertragene Vibrationen könnten zu einem Verschleiß des Gehäuses beitragen. Durch das zweite Antivibrationselement zwischen Motor und Gehäuse ist das Gehäuse gut geschützt. Die beiden Antivibrationselemente können weich ausgelegt werden und eine starke Dämpfung der Vibrationen bewirken. Durch die geringe Übertragung von Vibrationen auf das Gehäuse werden bei Berührung des Gehäuses durch den Benutzer kaum Vibrationen auf den Benutzer übertragen. Insbesondere kann an dem Gehäuse ein Griff zum Tragen und/oder Führen des Arbeitsgeräts angeordnet sein. Der Griff kann fest mit dem Gehäuse verbunden sein.

Aufgrund der guten Vibrationsentkopplung des Gehäuses ist ein geräuscharmer Betrieb des Arbeitsgeräts möglich. Das Gehäuse wird kaum oder gar nicht zur Schallabstrahlung angeregt. Das Gehäuse trägt kaum oder gar nicht zur Geräuschbelästigung durch das Arbeitsgerät bei. Das Gehäuse kann sehr leicht sein, da es zur Vermeidung von Schallabstrahlung keine große Masse aufweisen muss. Dies ermöglicht eine Gewichtseinsparung. Ebenfalls ist die Verwendung von leichteren und/oder günstigeren Materialien möglich.

In vorteilhafter Weiterbildung der Erfindung ist das zweite Antivibrationselement in einem in Längsrichtung gemessenen Elementabstand zum ersten Antivibrationselement angeordnet. Durch einen Abstand zwischen den beiden Antivibrationselementen können diese weicher ausgelegt werden und dennoch das Gehäuse hinreichend abstützen. Dadurch, dass die beiden Antivibrationselemente weicher ausgelegt werden können, können sie Vibrationen besser dämpfen. Dies erhöht die Langlebigkeit des Arbeitsgeräts. Das Gehäuse weist eine in Längsrichtung gemessene Gehäuselänge auf. Die Längsrichtung ist die Richtung, in die sich das Führungsrohr an der Eintrittsstelle in das Gehäuse erstreckt. Insbesondere entspricht die Längsrichtung der Richtung einer Tangente an das Führungsrohr an der Eintrittsstelle. Insbesondere entspricht die Längsrichtung der Richtung, in die sich eine Antriebsachse des Motors erstreckt. Das Gehäuse weist eine in Längsrichtung gemessene Gehäuselänge auf. Vorteilhaft beträgt der Elementabstand mindestens 30%, insbesondere mindestens 40% der Gehäuselänge. Dadurch können das erste Antivibrationselement und das zweite Antivibrationselement so angeordnet sein, dass das Gehäuse gegenüber dem Führungsrohr gut abgestützt ist und gleichzeitig eine große Dämpfungswirkung der Antivibrationselemente möglich ist, da die beiden Antivibrationselemente weich ausgelegt werden können.

Bevorzugt verbindet das zweite Antivibrationselement zumindest mittelbar das Führungsrohr vibrationsentkoppelt mit dem Gehäuse. Durch die Vibrationsentkopplung von Führungsrohr und Gehäuse ist das Gehäuse vor einem Verschleiß durch Kontakt mit dem Führungsrohr, insbesondere vor vom Führungsrohr auf das Gehäuse übertragenen Vibrationen geschützt.

Zweckmäßig ist das zweite Antivibrationselement auf der dem Werkzeug abgewandten Seite des Motors angeordnet. Dadurch ist insbesondere der Motor gegenüber dem Gehäuse durch das zweite Antivibrationselement sicher abgestützt. Auf diese Weise kann ein statisches Moment, das bezüglich eines Drehpunktes um das erste Antivibrationselement vorhanden ist, sicher abgefangen werden. Insbesondere kann die Wirkung der Gewichtskraft auf das Gehäuse so abgefangen werden, dass das Gehäuse nicht an dem Motor und/oder dem Führungsrohr anliegt. Dadurch kann eine Anlage des Motors und/oder des Führungsrohrs am Gehäuse verhindert werden. Dies kann die Übertragung von Vibrationen vom Motor auf das Gehäuse verhindern. Das steigert die Langlebigkeit des Gehäuses. Der Motor besitzt eine große Schwingungsmasse. Durch die Anordnung des ersten Antivibrationselements auf der dem Werkzeug zugewandten Seite des Motors und des zweiten Antivibrationselements auf der dem Werkzeug abgewandten Seite des Motors können die Vibrationen des Motors durch die beiden Antivibrationselemente effektiv gedämpft werden. Wenn nur das erste Antivibrationselement vorgesehen wäre, könnte der Schwerpunkt des Motors mit einem großen Hebelarm um einen Drehpunkt des ersten Antivibrationselements schwingen und hierbei gegen das Gehäuse stoßen. Dies ist durch die Anordnung des zweiten Antivibrationselements auf der dem Werkzeug abgewandten Seite des Motors sicher verhindert. Die Anordnung des zweiten Antivibrationselements auf der dem Werkzeug abgewandten Seite des Motors verhindert das geschilderte Szenario sicherer als die Anordnung des zweiten Antivibrationselements auf der dem Werkzeug zugewandten Seite des Motors.

In vorteilhafter Weiterbildung der Erfindung ist in dem Gehäuse ein Akku zur Versorgung des Motors mit Energie angeordnet. Es kann vorgesehen sein, dass der Akku derart mit dem Gehäuse verbunden ist, dass der Akku gemeinsam mit dem Gehäuse mittels des zweiten Antivibrationselements gegenüber dem Motor vibrationsentkoppelt ist. Dadurch ist auch der Akku vor Vibrationen des Motors geschützt. Durch die Anordnung eines Akkus am Gehäuse wird die träge Masse des Gehäuses vergrößert. Dadurch kann die Aufnahme von bestimmten Schwingungsfrequenzen durch das Gehäuse verhindert werden. Dadurch kann auch die Abstrahlung von hochfrequentem Schall durch das Gehäuse vermieden werden. Insbesondere weist das Gehäuse einen Akkuschacht zur Aufnahme des Akkus auf. Zweckmäßig besitzt der Akkuschacht eine Struktur in Form von Sicken und/oder Verdickungen. Durch geeignete Ausbildung der Struktur des Akkuschachts lässt sich die Schallabstrahlung des Gehäuses positiv beeinflussen. Das Gehäuse trägt nur in geringem Maße oder gar nicht zur Schallerzeugung durch das Arbeitsgerät bei.

Das erste Antivibrationselement weist zum Akku einen in Längsrichtung gemessenen Akkuabstand auf. Das zweite Antivibrationselement weist zu dem ersten Antivibrationselement den in Längsrichtung gemessenen Elementabstand auf. Bevorzugt beträgt der Elementabstand mindestens 50% des Akkuabstands. In der Regel weisen Akkus eine große Masse auf. Der Masseschwerpunkt der Einheit aus Gehäuse und Akku ist ganz wesentlich durch die Lage des Akkus im Gehäuse beeinflusst. Dadurch, dass der Elementabstand mindestens 50% des Akkuabstands beträgt, ist sichergestellt, dass das Gehäuse relativ nah am Akku und an dessen Schwerpunkt abgestützt wird. Dadurch können große Relativbewegungen zwischen dem Gehäuse und dem Motor verhindert werden. Dies schützt das Gehäuse und insbesondere den Akku vor Kontakt mit dem Motor, insbesondere vor einer Übertragung der Vibrationen des Motors, und sorgt für eine große Langlebigkeit des handgeführten Arbeitsgeräts.

Bevorzugt beträgt der Akkuabstand mindestens 100 mm, insbesondere mindestens 500 mm. Bei Arbeitsgeräten mit großem Akkuabstand kann der Verschleiß des Gehäuses und/oder des Akkus besonders groß sein. Dann ist das erfindungsgemäße zweite Antivibrationselement besonders vorteilhaft.

Insbesondere beträgt der Akkuabstand maximal 800 mm. Dadurch ist sichergestellt, dass der am ersten Antivibrationselement ansetzende Hebel des Gehäuses und des Akkus nicht zu groß ist.

Bevorzugt ist der Akkuabstand größer als der Elementabstand. Insbesondere ist das zweite Antivibrationselement bezüglich der Längsrichtung zwischen dem Motor und dem Akku angeordnet.

Bevorzugt ist der Akku auf der dem Werkzeug abgewandten Seite des Motors angeordnet. In diesem Fall ist die erfindungsgemäße Gestaltung des handgeführten Arbeitsgeräts besonders vorteilhaft, da die Einheit aus Gehäuse und Akku einen Schwerpunkt aufweist, der bezüglich der Längsrichtung besonders weit vom ersten Antivibrationselement entfernt liegt, so dass grundsätzlich große Schwingungsamplituden des Gehäuses gemeinsam mit dem Akku denkbar sind. Dadurch ist auch prinzipiell ein großer Verschleiß des Gehäuses oder auch des Akkus möglich. Das zweite Antivibrationselement verhindert einen solchen Verschleiß.

Vorteilhaft ist das Führungsrohr zumindest mittelbar starr mit dem Motor verbunden. Dadurch ist der Motor sicher gehalten. Insbesondere ist die Positionierung eines Getriebes zwischen dem Motor und der Übertragungswelle sicher festgelegt.

Bevorzugt sind das Führungsrohr und der Motor über eine Verbindung verbunden, die frei von einem Antivibrationselement ist.

In vorteilhafter Weiterbildung der Erfindung ist vorgesehen, dass der Motor auf seiner dem Werkzeug abgewandten Seite an mindestens einer ersten Lagerstelle und einer zweiten Lagerstelle vibrationsentkoppelt mit dem Gehäuse verbunden ist. Insbesondere ist die erste Lagerstelle in einem ersten Radialabstand zu einer Abtriebswelle des Motors angeordnet. Insbesondere ist die zweite Lagerstelle in einem zweiten Radialabstand zur Abtriebswelle des Motors angeordnet. Bevorzugt sind der erste Radialabstand und der zweite Radialabstand jeweils mindestens so groß wie ein Radius des Führungsrohrs. Der Radius des Führungsrohrs ist insbesondere radial zur Abtriebswelle des Motors an der Eintrittsstelle des Führungsrohrs in das Gehäuse gemessen. Dadurch, dass die Radialabstände der beiden Lagerstellen mindestens so groß sind wie der Radius des Führungsrohrs, wird das Moment, insbesondere das Kraftmoment des Motors an den Lagerstellen effizient abgefangen. Insbesondere sind die erste Lagerstelle und die zweite Lagerstelle mit einem Winkelabstand bezüglich der Abtriebswelle des Motors zueinander angeordnet. Auch dies trägt zu einer guten Abfangung des Moments, insbesondere des Kraftmoments des Motors bei. Insbesondere beträgt der Winkelabstand mindestens 90°, insbesondere mindestens 150°, insbesondere mindestens 170°. Insbesondere beträgt der Winkelabstand höchstens 190°.

Bevorzugt ist der Motor an den Lagerstellen über ein Antivibrationselement mit dem Gehäuse vibrationsentkoppelt verbunden. Vorteilhaft ist der Motor an der ersten Lagerstelle und an der zweiten Lagerstelle über das zweite Antivibrationselement am Gehäuse gelagert. Es kann vorgesehen sein, dass der Motor an mehreren Lagerstellen mittels desselben, einteiligen Antivibrationselements am Gehäuse gelagert ist.

Vorteilhaft weist das handgeführte Arbeitsgerät ein drittes Antivibrationselement auf. Insbesondere verbindet das dritte Antivibrationselement zumindest mittelbar den Motor mit dem Gehäuse vibrationsentkoppelt. Bevorzugt ist das dritte Antivibrationselement auf der dem Werkzeug abgewandten Seite des Motors angeordnet. Insbesondere weist das handgeführte Arbeitsgerät ein viertes Antivibrationselement auf. Zweckmäßig ist das vierte Antivibrationselement so angeordnet, dass es zwischen dem Gehäuse und dem Führungsrohr vibrationsentkoppelnd wirkt. Bevorzugt ist das vierte Antivibrationselement auf der dem Werkzeug zugewandten Seite des Motors angeordnet. Insbesondere liegen das erste Antivibrationselement und das vierte Antivibrationselement in einer ersten Ebene. Die erste Ebene erstreckt sich in Längsrichtung. Zweckmäßig liegen das zweite Antivibrationselement und das dritte Antivibrationselement in einer zweiten Ebene. Die zweite Ebene erstreckt sich in Längsrichtung. Vorteilhaft schließen die erste Ebene und die zweite Ebene einen Winkel von 70° bis 110°, insbesondere von 80° bis 100° ein. Dadurch ergibt sich eine besonders stabile Abstützung des Gehäuses gegenüber dem Führungsrohr und dem Motor. Das erste Antivibrationselement und das vierte Antivibrationselement bilden ein erstes Paar. Das zweite Antivibrationselement und das dritte Antivibrationselement bilden ein zweites Paar. Das erste Paar und das zweite Paar sind gewissermaßen kreuzweise zueinander angeordnet. Dadurch werden Vibrationen in Radialrichtungen der Abtriebswelle des Motors gedämpft, die im Wesentlichen quer, insbesondere senkrecht zueinander verlaufen. Hieraus resultiert eine gute Dämpfung der Vibrationen des Motors gegenüber dem Gehäuse.

Insbesondere ist das erste Antivibrationselement in einem dritten Radialabstand zu der Übertragungswelle, insbesondere zu der Abtriebswelle des Motors angeordnet. Zweckmäßig ist das vierte Antivibrationselement in einem vierten Radialabstand zu der Übertragungswelle, insbesondere zu der Abtriebswelle des Motors angeordnet. Bevorzugt ist der dritte Radialabstand mindestens so groß wie der Radius des Führungsrohrs. Vorteilhaft ist der vierte Radialabstand mindestens so groß wie der Radius des Führungsrohrs.

In vorteilhafter Weiterbildung der Erfindung ist vorgesehen, dass das handgeführte Arbeitsgerät so ausgelegt ist, dass eine Übertragung von Vibrationen von der Übertragungswelle auf das Gehäuse nur über Antivibrationselemente gedämpft möglich ist. Dies schützt das Gehäuse auch vor Verschleiß durch die Übertragungswelle.

Zweckmäßig ist eines der Antivibrationselemente unmittelbar mit dem Gehäuse und unmittelbar mit dem Führungsrohr verbunden. Insbesondere ist das erste Antivibrationselement unmittelbar mit dem Gehäuse und unmittelbar mit dem Führungsrohr verbunden.

Vorteilhaft dichtet eines der Antivibrationselemente, insbesondere das erste Antivibrationselement einen Spalt zwischen dem Führungsrohr und dem Gehäuse ab. Dadurch ist eine effiziente Führung der Luft zur Kühlung des Motors möglich.

Vorteilhaft umfasst das handgeführte Arbeitsgerät einen Handgriff. Der Handgriff ist mit dem Gehäuse verbunden. Insbesondere ist der Handgriff gemeinsam mit dem Gehäuse sowohl gegenüber dem Führungsrohr als auch gegenüber dem Motor vibrationsentkoppelt. Dies ermöglicht dem Benutzer des handgeführten Arbeitsgeräts einen komfortablen Einsatz des handgeführten Arbeitsgeräts. Er ist vor der ungedämpften Übertragung von Schwingungen des Motors auf den Handgriff und auf ihn selbst geschützt. Durch die Vibrationsentkopplung des Handgriffs gemeinsam mit dem Gehäuse gegenüber dem Führungsrohr ist der Benutzer vor der ungedämpften Übertragung von Schwingungen vom Führungsrohr, insbesondere vor der ungedämpften Übertragung von Schwingungen des Werkzeugs über das Führungsrohr, auf den Handgriff und auf ihn selbst geschützt.

Zweckmäßig ist der Motor mit dem Gehäuse ausschließlich über zwischengeschaltete Antivibrationselemente verbunden, so dass Vibrationen vom Motor auf das Gehäuse nur über Antivibrationselemente gedämpft übertragbar sind. Dadurch ist sichergestellt, dass das Gehäuse keinen Schaden durch Vibrationen des Motors nimmt.

Ausführungsbeispiele der Erfindung werden im Folgenden anhand der Zeichnung erläutert. Es zeigen:
- Fig. 1: eine schematische Schnittdarstellung eines ersten Ausführungsbeispiels eines handgeführten Arbeitsgeräts mit einem ersten Antivibrationselement und einem zweiten Antivibrationselement,
- Fig. 2: eine schematische Schnittdarstellung entlang der Schnittlinie II-II aus Fig. 2,
- Fig. 3: eine schematische Darstellung der Antivibrationselemente aus Fig. 1 mit Blickrichtung in Richtung des Pfeils III aus Fig. 1,
- Fig. 4: eine schematische Schnittdarstellung eines zweiten Ausführungsbeispiels eines handgeführten Arbeitsgeräts mit einem ersten Antivibrationselement und einem zweiten Antivibrationselement,
- Fig. 5: eine schematische Darstellung der Antivibrationselemente aus Fig. 4 mit Blickrichtung in Richtung des Pfeils V aus Fig. 4,
- Fig. 6: eine schematische Schnittdarstellung eines dritten Ausführungsbeispiels eines handgeführten Arbeitsgeräts mit einem ersten Antivibrationselement und einem zweiten Antivibrationselement,
- Fig. 7: eine schematische Darstellung der Antivibrationselemente aus Fig. 6 mit Blickrichtung in Richtung des Pfeils VII aus Fig. 6.

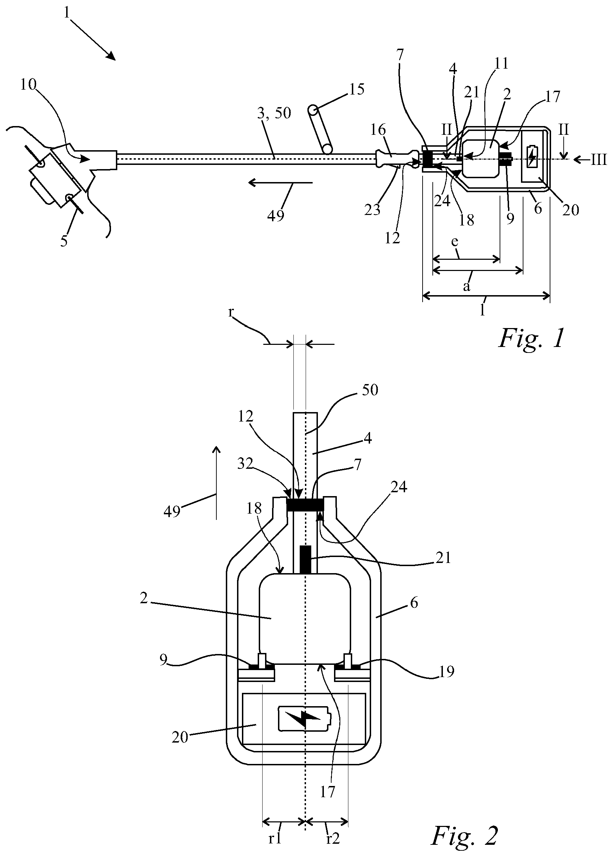

Fig. 1 zeigt ein handgeführtes Arbeitsgerät 1 mit einem Führungsrohr 4. Im Ausführungsbeispiel ist das handgeführte Arbeitsgerät 1 ein Freischneider. Es kann sich bei dem handgeführten Arbeitsgerät aber auch um jedes andere Arbeitsgerät mit einem Führungsrohr handeln. Das handgeführte Arbeitsgerät kann auch ein Hochentaster, ein Heckenschneider oder dergleichen sein.

Das handgeführte Arbeitsgerät 1 umfasst einen Motor 2 und ein Werkzeug 5. Im Ausführungsbeispiel ist der Motor 2 ein Elektromotor. Bei dem Motor kann es sich jedoch auch um einen Verbrennungsmotor handeln. Das Werkzeug 5 ist im Ausführungsbeispiel ein Schneidfaden eines Mähkopfs. Bei dem Werkzeug 5 kann es sich jedoch auch um eine Sägekette, ein Sägeblatt oder ähnliches handeln. Der Motor 2 treibt das Werkzeug 5 an. Der Motor 2 ist in einem Gehäuse 6 angeordnet.

Das Führungsrohr 4 besitzt ein vorderes Längsende 10 und ein hinteres Längsende 11. Das Werkzeug 5 ist am vorderen Längsende 10 des Führungsrohrs 4 angeordnet. Das Gehäuse 6 ist an dem hinteren Längsende 11 des Führungsrohrs 4 angeordnet.

In dem Führungsrohr 4 ist eine Übertragungswelle 3 aufgenommen. Die Übertragungswelle 3 verbindet den Motor 2 mit dem Werkzeug 5. Der Motor 2 treibt über die Übertragungswelle 3 das Werkzeug 5 an.

Das Führungsrohr 4 steht aus dem Gehäuse 6 hervor. Das Gehäuse 6 ist an dem Führungsrohr 4 gehalten. Das Gehäuse 6 umgreift das Führungsrohr 4 zumindest teilweise. Das Führungsrohr 4 ragt in das Gehäuse 6 hinein.

Das handgeführte Arbeitsgerät 1 umfasst ein erstes Antivibrationselement 7. Das erste Antivibrationselement 7 ist so angeordnet, dass es zwischen dem Gehäuse 6 und dem Führungsrohr 4 vibrationsentkoppelnd wirkt. Das erste Antivibrationselement 7 ist zur Vibrationsentkopplung zwischen dem Gehäuse 6 und dem Führungsrohr 4 angeordnet.

Das Gehäuse 6 besitzt eine Eintrittsstelle 12. An der Eintrittsstelle 12 tritt das Führungsrohr 4 in das Gehäuse 6 ein. Die Eintrittsstelle 12 ist eine Öffnung im Gehäuse 6. Diese Öffnung durchdringt eine Wand des Gehäuses vollständig. Durch die Eintrittsstelle 12 dringt das Führungsrohr 4 von einer Außenseite des Gehäuses 6 in das Innere des Gehäuses 6 ein. Die Eintrittsstelle 12 ist bezüglich der Längsrichtung 49 dem Werkzeug 5 zugewandt. An der Eintrittsstelle 12 erstreckt sich das Führungsrohr 4 in einer Längsrichtung 49. Wenn der Verlauf des Führungsrohrs an der Eintrittsstelle 21 gekrümmt ist, verläuft die Längsrichtung 49 in Richtung einer Tangente an das Führungsrohr an der Eintrittsstelle 12. In diesem Fall verläuft die Längsrichtung 49 in Richtung einer Tangente an die Übertragungswelle 3 an der Eintrittsstelle 12. Der Motor 2 besitzt eine Abtriebswelle 21 mit einer Drehachse 50. Im Ausführungsbeispiel verläuft die Längsrichtung 49 in Richtung der Drehachse 50.

In einer alternativen Beschreibung der Erfindung kann vorgesehen sein, dass die Längsrichtung 49 entlang des Verlaufs der Übertragungswelle 3 verläuft. Die Längsrichtung 29 folgt dann dem Verlauf der Übertragungswelle 3. Die in Richtung der Längsrichtung 49 gemessenen Längen entsprechen dann einen Wegintegral entlang der möglicherweise auch gekrümmten Längsrichtung 49. Alle hier angegeben Längenangaben und -verhältnisse treffen auch auf Längen zu die entlang einer so definierten Längsrichtung gemessen sind.

Im Ausführungsbeispiel ist das erste Antivibrationselement 7 im Gehäuse 6 angeordnet. Insbesondere ist das erste Antivibrationselement 7 an der Eintrittsstelle 12 des Gehäuses 6 angeordnet. Es kann aber auch vorgesehen sein, dass das erste Antivibrationselement 7 an anderer Stelle angeordnet ist. Das erste Antivibrationselement 7 verbindet das Führungsrohr 4 zumindest mittelbar mit dem Gehäuse 6 vibrationsentkoppelt. Im Ausführungsbeispiel nach Fig. 1 verbindet das erste Antivibrationselement 7 das Führungsrohr 4 und das Gehäuse 6 unmittelbar vibrationsentkoppelt miteinander. Es kann aber auch vorgesehen sein, dass zwischen dem ersten Antivibrationselement 7 und dem Führungsrohr 4 zumindest ein Bauteil angeordnet ist, das fest mit dem Führungsrohr 4 verbunden ist, so dass das zumindest eine Bauteil gemeinsam mit dem Führungsrohr 4 schwingt. In diesem Fall ist das erste Antivibrationselement 7 mittelbar über das zumindest eine Bauteil mit dem Führungsrohr 4 verbunden. Es kann auch vorgesehen sein, dass zwischen dem Gehäuse 6 und dem ersten Antivibrationselement 7 zumindest ein Bauelement angeordnet ist, das fest mit dem Gehäuse 6 verbunden ist, so dass das zumindest eine Bauelement gemeinsam mit dem Führungsrohr 4 schwingt. In diesem Fall ist das erste Antivibrationselement 7 mittelbar über das zumindest eine Bauelement mit dem Führungsrohr 4 verbunden.

Der Motor 2 besitzt eine dem Werkzeug 5 zugewandte Seite 18. Die dem Werkzeug 5 zugewandte Seite 18 ist dem Werkzeug 5 bezüglich der Längsrichtung 49 zugewandt. Das erste Antivibrationselement 7 ist auf der dem Werkzeug 5 zugewandten Seite 18 des Motors 2 angeordnet.

Das erste Antivibrationselement 7 wirkt im ersten Ausführungsbeispiel quer, insbesondere senkrecht zur Längsrichtung 49. Das erste Antivibrationselement 7 kann insbesondere Vibrationen mit eine Schwingungsamplitude in Richtung quer, insbesondere senkrecht zur Längsrichtung 49 dämpfen. Im den Ausführungsbeispielen ist das erste Antivibrationselement 7 ein Elastomer. Es kann aber auch vorgesehen sein, dass das erste Antivibrationselement eine Feder, insbesondere eine Spiralfeder ist. Auch andere Arten von Dämpfungselementen sind möglich.

Das Arbeitsgerät 1 umfasst ein zweites Antivibrationselement 9. Das zweite Antivibrationselement 9 verbindet den Motor 2 mit dem Gehäuse 6 zumindest mittelbar vibrationsentkoppelt. In Ausführungsbeispiel nach Fig. 1 verbindet das zweite Antivibrationselement 9 den Motor 2 unmittelbar mit dem Gehäuse 6 vibrationsentkoppelt. Das zweite Antivibrationselement 9 ist zur Vibrationsentkopplung zwischen dem Motor 2 und dem Gehäuse 6 angeordnet.

Das zweite Antivibrationselement 9 wirkt im ersten Ausführungsbeispiel quer, insbesondere senkrecht zur Längsrichtung 49. Das zweite Antivibrationselement 9 kann insbesondere Vibrationen mit eine Schwingungsamplitude in Richtung quer, insbesondere senkrecht zur Längsrichtung 49 dämpfen. In den Ausführungsbeispielen ist das zweite Antivibrationselement 9 ein Elastomer. Es kann aber auch vorgesehen sein, dass das zweite Antivibrationselement eine Feder, insbesondere eine Spiralfeder ist. Auch andere Arten von Dämpfungselementen sind möglich.

Das zweite Antivibrationselement 9 weist zu dem ersten Antivibrationselement 7 einen in Längsrichtung 49 gemessenen Elementabstand e auf. Das Gehäuse 6 weist eine in Längsrichtung 49 gemessene Gehäuselänge 1 auf. Der Elementabstand e beträgt mindestens 30% der Gehäuselänge 1. In den Ausführungsbeispielen beträgt der Elementabstand e mindestens 40% der Gehäuselänge 1. In den Ausführungsbeispielen beträgt der Elementabstand e höchstens 100%, insbesondere höchstens 95% der Gehäuselänge 1. Es kann auch vorgesehen sein, dass der Elementabstand e höchstens 70% der Gehäuselänge l beträgt.

Das Führungsrohr 4 ist zumindest mittelbar starr mit dem Motor 2 verbunden. Das Führungsrohr 4 und der Motor 2 sind über eine Verbindung miteinander verbunden, die frei von einem Antivibrationselement ist. Es kann auch vorgesehen sein, dass zwischen dem Motor 2 und dem Führungsrohr 4 ein Getriebe angeordnet ist. Der Motor wird dann mittelbar von dem Führungsrohr 4 über das Getriebe abgestützt.

Insbesondere umfasst die Verbindung zwischen Motor 2 und Führungsrohr 4 einen nicht dargestellten Flansch. Der Flansch ist am Führungsrohr oder am Getriebe befestigt. Der Flansch ist drehfest mit dem Führungsrohr 4 verbunden. Der Motor 2 umfasst im Ausführungsbeispiel einen Stator und einen Rotor. Der Stator ist drehfest an dem Flansch befestigt. Der Rotor ist drehbar an dem Flansch gelagert. Der Motor 2 ist über den Flansch starr mit dem Führungsrohr 4 verbunden.

Vibrationen des Motors 2 können ungehindert auf das Führungsrohr 4 übertragen werden. Vibrationen des Führungsrohrs 4 können ungehindert auf den Motor 2 übertragen werden. Der Motor 2 und das Führungsrohr 4 sind vibrationsgekoppelt. Durch die starre Verbindung von Motor 2 und Führungsrohr 4 ist es möglich, beide gemeinsam gegenüber dem Gehäuse abzustützen. Zur Abstützung der Einheit aus Motor 4 und Führungsrohr 4 genügen dadurch grundsätzlich zwei Antivibrationselemente.

Das zweite Antivibrationselement 9 verbindet das Führungsrohr 4 zumindest mittelbar vibrationsentkoppelt mit dem Gehäuse 6. Das zweite Antivibrationselement 9 verbindet das Führungsrohr 4 mittelbar über den Motor 2 mit dem Gehäuse 6 vibrationsentkoppelt. Es kann auch vorgesehen sein, dass das zweite Antivibrationselement das Führungsrohr unmittelbar vibrationsentkoppelt mit dem Gehäuse 6 verbindet. Der Motor 2 besitzt eine dem Werkzeug 5 abgewandte Seite 17. Die dem Werkzeug 5 abgewandte Seite 17 des Motors 7 ist dem Werkzeug 5 bezüglich der Längsrichtung 49 abgewandt. In den Ausführungsbeispielen ist das zweite Antivibrationselement 9 auf der dem Werkzeug 5 abgewandten Seite des Motors 2 angeordnet. Es kann aber auch vorgesehen sein, dass das zweite Antivibrationselement an anderer Stelle angeordnet ist. In den Ausführungsbeispielen ist der Motor 2 bezüglich der Längsrichtung 49 zwischen dem ersten Antivibrationselement 7 und dem zweiten Antivibrationselement 9 angeordnet.

Der Motor 2 ist mit dem Gehäuse 6 ausschließlich über zwischengeschaltete Antivibrationselemente 7, 9 verbunden, so dass Vibrationen vom Motor 2 auf das Gehäuse 6 nur über Antivibrationselemente 7, 9 gedämpft übertragbar sind.

Das handgeführte Arbeitsgerät 1 ist so ausgelegt, dass eine Übertragung von Vibrationen von der Übertragungswelle 3 auf das Gehäuse 6 nur über Antivibrationselemente 7,9 gedämpft möglich ist. Das Gehäuse 6 ist sowohl über das erste Antivibrationselement 7 als auch über das zweite Antivibrationselement 9 abgestützt. Das Gehäuse 6 ist zumindest mittelbar über das erste Antivibrationselement 7 und das zweite Antivibrationselement 9 an dem Führungsrohr 4 gehalten.

Das Arbeitsgerät 1 umfasst einen Akku 20. Der Akku 20 dient zur Versorgung des Motors 2 mit Energie. Der Akku 20 ist in dem Gehäuse 6 angeordnet. Der Akku 20 ist derart mit dem Gehäuse 6 verbunden, dass der Akku 20 mit dem Gehäuse 6 eine gemeinsam schwingende Masse bildet. Der Akku 20 ist derart mit dem Gehäuse 6 verbunden, dass der Akku 20 gemeinsam mit dem Gehäuse 6 mittels des zweiten Antivibrationselements 9 gegenüber dem Motor 2 vibrationsentkoppelt ist. Der Akku 20 ist an dem Gehäuse 6 befestigt. Es kann vorgesehen sein, dass der Akku 20 starr mit dem Gehäuse 6 verbunden ist. Im Ausführungsbeispiel ist der Akku 20 über nicht dargestellte Auswurf- und Klemmfedern im Gehäuse 6, insbesondere in einem nicht dargestellten Akkuschacht des Gehäuses 6 gehalten.

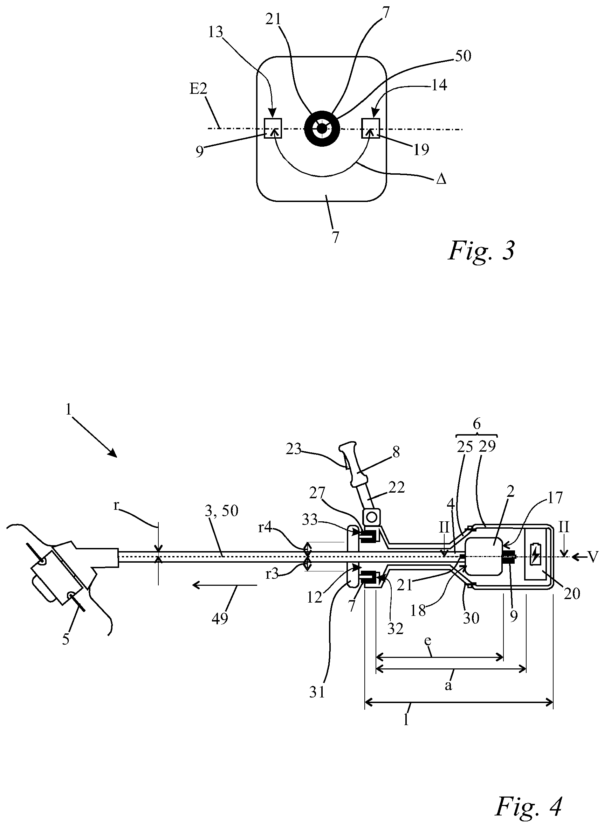

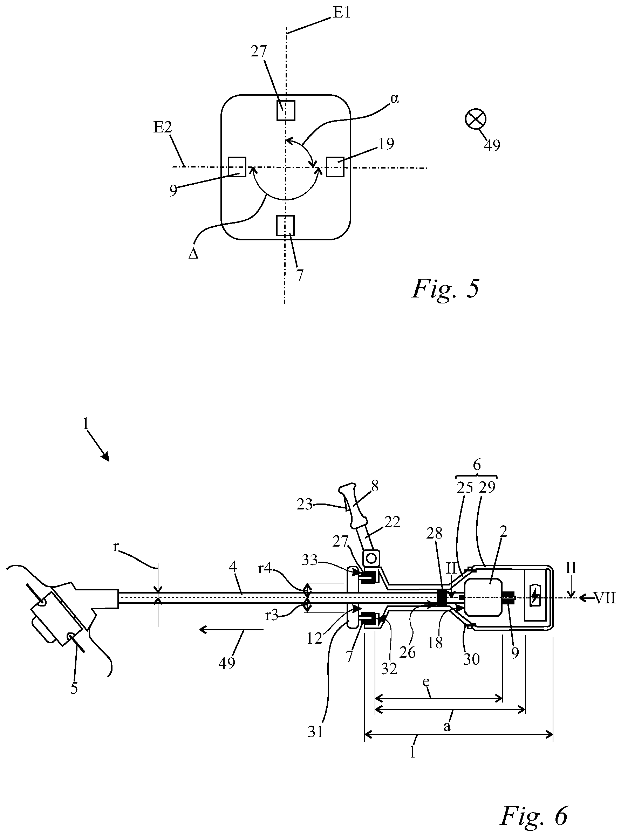

Das erste Antivibrationselement 7 weist zu dem Akku 20 einen in Längsrichtung 49 gemessenen Akkuabstand a auf. Der in Längsrichtung 49 gemessene Elementabstand e zwischen dem ersten Antivibrationselement und 7 und dem zweiten Antivibrationselement 9 beträgt mindestens 50% des Akkuabstands a. In den Ausführungsbeispielen beträgt der Elementabstand e mindestens 60% des Akkuabstands a. Im Ausführungsbeispiel nach Fig. 1 beträgt der Akkuabstand a mindestens 100 mm. In den Ausführungsbeispielen nach den Figuren 4 und 6 beträgt der Akkuabstand a mindestens 500 mm. Der Akkuabstand a beträgt maximal 800 mm. Der Akkuabstand a ist größer als der Elementabstand e. Der Akku 20 ist auf der dem Werkzeug 5 abgewandten Seite 17 des Motors 2 angeordnet. In den Ausführungsbeispielen ist das zweite Antivibrationselement 9 bezüglich der Längsrichtung 49 zwischen dem Motor 2 und dem Akku 20 angeordnet.

Wie in Figur 1 dargestellt, besitzt das handgeführte Arbeitsgerät 1 im Ausführungsbeispiel nach Fig. 1 einen Handgriff 16. Der Handgriff 16 ist am Führungsrohr 4 befestigt. Der Handgriff 16 ist mit dem Führungsrohr 4 vibrationsgekoppelt. Am Handgriff 16 ist ein Betätigungselement 23 angeordnet. Das Betätigungselement 23 dient zur Betätigung des Motors 2. Mittels des Handgriffs 16 kann das handgeführte Arbeitsgerät 1 gehalten werden. Zusätzlich weist das handgeführte Arbeitsgerät 1 einen Führungsgriff 15 auf. Der Führungsgriff 15 dient zur Führung des handgeführten Arbeitsgeräts 1. Im Ausführungsbeispiel nach Fig. 1 ist der Führungsgriff 15 durch ein Griffrohr gebildet. Das Griffrohr des Führungsgriffs 15 ist am Führungsrohr 4 befestigt. Das Griffrohr des Führungsgriffs 15 ist schleifenförmig geformt.

Wie in Fig. 2 dargestellt, umfasst das handgeführte Arbeitsgerät 1 ein drittes Antivibrationselement 19. Auf das dritte Antivibrationselement 19 treffen alle vorstehenden Aussagen zum zweiten Antivibrationselement 9 in analoger Weise zu. Insbesondere verbindet das dritte Antivibrationselement 19 den Motor 2 mit dem Gehäuse 6 zumindest mittelbar vibrationsentkoppelt. Das dritte Antivibrationselement 19 ist so angeordnet, dass es zwischen dem Gehäuse 6 und dem Führungsrohr 4 vibrationsentkoppelnd wirkt. Das dritte Antivibrationselement 19 ist auf der dem Werkzeug 5 abgewandten Seite 17 des Motors 2 angeordnet. Das zweite Antivibrationselement 9 und das dritte Antivibrationselement 19 sind in Richtung quer zur Längsrichtung 49, in den Ausführungsbeispielen in Richtung senkrecht zur Längsrichtung 49 zueinander beabstandet.

Das handgeführte Arbeitsgerät 1 besitzt eine erste Lagerstelle 13 und eine zweite Lagerstelle 14. Die erste Lagerstelle 13 und die zweite Lagerstelle 14 dienen zur zumindest mittelbaren Lagerung des Motors 2. Es kann vorgesehen sein, dass zwischen den Lagerstellen 13 und 14 und dem Motor 2 weitere Bauteile des Arbeitsgeräts 1 angeordnet sind. Im Ausführungsbeispiel wird der Motor 2 zusätzlich durch das erste Antivibrationselement 7 gelagert. Die erste Lagerstelle 13 und die zweite Lagerstelle 14 sind auf der dem Werkzeug 5 abgewandten Seite 17 des Motors 2 angeordnet. Das erste Antivibrationselement 7 ist auf der dem Werkzeug 5 zugewandten Seite 18 des Motors 2 angeordnet. Das erste Antivibrationselement 7 lagert das Gehäuse 6 an einer dritten Lagerstelle 32 an dem Führungsrohr 4. Auf diese Weise ist der Motor 2 zumindest mittelbar an der dritten Lagerstelle 32 gelagert. Es kann auch vorgesehen sein, dass die Einheit aus Motor 2 und Führungsrohr 4 lediglich an einer einzigen Lagerstelle auf der dem Werkzeug 5 zugewandten Seite 18 des Motors 2 und gleichzeitig lediglich an einer einzigen Lagerstelle auf der dem Werkzeug 5 abgewandten Seite 17 gelagert ist.

Im Ausführungsbeispiel ist der Motor 2 auf seiner dem Werkzeug 5 abgewandten Seite 17 an mindestens der ersten Lagerstelle 13 und der zweiten Lagerstelle 14 vibrationsentkoppelt mit dem Gehäuse 6 verbunden. Wie in Fig. 2 dargestellt, besitzt die erste Lagerstelle 13 einen ersten Radialabstand r1 zur Drehachse 50 der Abtriebswelle 21. Die zweite Lagerstelle 14 besitzt einen zweiten Radialabstand r2 zur Drehachse 50 der Abtriebswelle 21 des Motors 2. Das Führungsrohr 4 besitzt einen Radius r. Insbesondere ist der Radius r an der Eintrittsstelle 12 gemessen. Der Radius r des Führungsrohrs ist bezüglich der Drehachse 50 der Abtriebswelle 21 gemessen. Der erste Radialabstand r1 und der zweite Radialabstand r2 sind jeweils mindestens so groß wie der Radius r des Führungsrohrs 4.

Wie in Fig. 3 dargestellt, sind die erste Lagerstelle 13 und die zweite Lagerstelle 14 in einem Winkelabstand α zueinander angeordnet. Der Winkelabstand α ist bezüglich der Drehachse 50 der Abtriebswelle 21 des Motors 2 gemessen. Der Winkelabstand α beträgt mindestens 90°, insbesondere mindestens 150°. Im Ausführungsbeispiel beträgt der Winkelabstand α mindestens 170°. Der Winkelabstand α beträgt höchstens 270°, insbesondere höchstens 210°. Im Ausführungsbeispiel beträgt der Winkelabstand α 190°.

Im Ausführungsbeispiel nach Fig. 3 ist der Motor 2 an der ersten Lagerstelle 13 über das zweite Antivibrationselement 9 mit dem Gehäuse 6 vibrationsentkoppelt verbunden. An der zweiten Lagerstelle 14 ist der Motor 2 über das dritte Antivibrationselement 19 vibrationsentkoppelt mit dem Gehäuse 6 verbunden. Es kann auch vorgesehen sein, dass der Motor sowohl an der ersten Lagerstelle als auch an der zweiten Lagerstelle über das zweite Antivibrationselement am Gehäuse gelagert ist. Es kann vorgesehen sein, dass der Motor an mehreren Lagerstellen mittels desselben, einteiligen Antivibrationselements am Gehäuse gelagert ist.

Wie in den Figuren 1 und 2 dargestellt, befindet sich zwischen dem Führungsrohr 4 und dem Gehäuse 6 ein Spalt 24. Der Spalt 24 läuft um das Führungsrohr 4 um. Der Spalt 24 ist an der Eintrittsstelle 12 angeordnet. Im Ausführungsbeispiel nach den Figuren 1 und 2 dichtet das erste Antivibrationselement 7 den Spalt 24 ab. Dadurch ist eine gute Kühlung des Motors 2 möglich.

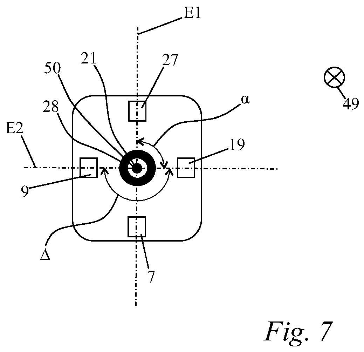

Die Figuren 4 und 5 zeigen ein zweites Ausführungsbeispiel für ein handgeführtes Arbeitsgerät 1. Die Figuren 6 und 7 zeigen ein drittes Ausführungsbeispiel für ein handgeführtes Arbeitsgerät 1. Bezugszeichen von sich entsprechenden Bauteilen der handgeführten Arbeitsgeräte 1 sind bei allen Ausführungsbeispielen gleich gewählt. Die Beschreibung zum ersten Ausführungsbeispiel nach den Figuren 1 bis 3 trifft in weiten Teilen auf das zweite Ausführungsbeispiel nach den Figuren 4 und 5 und auf das dritte Ausführungsbeispiel nach den Figuren 6 und 7 zu. Das zweite und das dritte Ausführungsbeispiel unterscheiden sich im Wesentlichen dadurch vom ersten Ausführungsbeispiel, dass das Gehäuse 6 gemäß des zweiten und des dritten Ausführungsbeispiels so gestaltet ist, dass ein Handgriff 8 vibrationsgekoppelt mit dem Gehäuse 6 verbunden ist. Hierfür umfasst das Gehäuse 6 beim zweiten und beim dritten Ausführungsbeispiel ein Halteteil 25. Die Gehäuselänge 1 ist im zweiten und im dritten Ausführungsbeispiel größer als im ersten Ausführungsbeispiel. Das Halteteil 25 hält zumindest mittelbar den Handgriff 8. Das Halteteil 25 überlappt das Führungsrohr 4 bezüglich der Längsrichtung 49 vollständig. Das Halteteil 25 umgreift das Führungsrohr 4. Das Halteteil 25 läuft geschlossen um den Umfang des Führungsrohrs 4 um. In Ausführungsbeispielen nach den Figuren 4 bis 7 ist die Eintrittsstelle 12 für das Führungsrohr 4 in das Gehäuse 6 im Halteteil 25 ausgebildet. Es kann vorgesehen sein, dass das Halteteil 25 einteilig mit dem Gehäuse 6 ausgebildet ist. Insbesondere ist das Halteteil 25 materialeinheitlich mit dem Gehäuse 6 ausgebildet. Im Ausführungsbeispiel ist das Halteteil 25 fest mit einem Grundkörper 29 des Gehäuses 6 verbunden. Insbesondere ist hierfür eine Schraubverbindung 30 vorgesehen.

Auch beim zweiten und beim dritten Ausführungsbeispiel ist das erste Antivibrationselement 7 an der Eintrittsstelle 12 angeordnet. Es kann aber auch vorgesehen sein, dass das erste Antivibrationselement an anderer Stelle als an der Eintrittsstelle 12 angeordnet ist. Beispielsweise kann auch das fünfte Antivibrationselement 28 aus dem dritten Ausführungsbeispiel als erstes Antivibrationselement angesehen werden.

Das in den Figuren 4 und 6 dargestellte erste Antivibrationselement 7 verbindet beim zweiten und beim dritten Ausführungsbeispiel das Gehäuse 6 mittelbar mit dem Führungsrohr 4. Zwischen dem Führungsrohr 4 und dem ersten Antivibrationselement 7 ist ein Verbindungsstück 31 angeordnet. Das Verbindungsstück 31 ist an dem Führungsrohr 4 befestigt, insbesondere starr befestigt.

Das erste Antivibrationselement 7 ist im zweiten und im dritten Ausführungsbeispiel in einem dritten Radialabstand r3 zu der Übertragungswelle 3, insbesondere zu der Abtriebswelle 21 des Motors 2 angeordnet. Das vierte Antivibrationselement 27 ist in einem vierten Radialabstand r4 zu der Übertragungswelle 3, insbesondere zu der Abtriebswelle 21 des Motors 2 angeordnet. Der dritte Radialabstand r3 ist mindestens so groß wie der Radius r des Führungsrohrs 4. Der vierte Radialabstand r4 ist mindestens so groß wie der Radius r des Führungsrohrs 4.

Die Position des zweiten Antivibrationselements 9 ist unverändert. Demzufolge ist der Elementabstand e zwischen dem ersten Antivibrationselement 7 und dem zweiten Antivibrationselement 9 in den Ausführungsbeispielen nach den Figuren 4 bis 7 größer als in dem Ausführungsbeispiel nach den Figuren 1 bis 3. Auch der Akkuabstand a zwischen dem ersten Antivibrationselement 7 und dem Akku 20 ist in den Ausführungsbeispielen nach den Figuren 4 bis 7 größer als im Ausführungsbeispiel nach den Figuren 1 bis 3. Die zum ersten Ausführungsbeispiel angegebenen Verhältnisse des Akkuabstand a zum Elementabstand e und des Elementabstands e zur Gehäuselänge l gelten jedoch auch für das zweiten und das dritte Ausführungsbeispiel.

Im zweiten und im dritten Ausführungsbeispiel ist der Handgriff 8 an einem Lenker 22 befestigt. Der Lenker 22 ist starr mit dem Gehäuse 6 verbunden. Der Lenker 22 ist starr mit dem Halteteil 25 des Gehäuses 6 verbunden. Am Handgriff 8 ist das Betätigungselement 23 zur Betätigung des Motors 2 angeordnet. Am Lenker 22 ist ein zweiter nicht dargestellter Handgriff befestigt. Der Handgriff 8 und der zweite Handgriff sind in Richtung quer, insbesondere senkrecht zur Längsrichtung 49 zueinander beabstandet.

Der Handgriff 8 ist gemeinsam mit dem Gehäuse 6 gegenüber dem Motor 2 vibrationsentkoppelt. Der Handgriff 8 ist gemeinsam mit dem Gehäuse 6 gegenüber dem Führungsrohr 4 vibrationsentkoppelt. Dadurch ist der Benutzer einer geringen oder gar keinen Belästigung durch die Vibrationen des Motors 2 und/oder des Werkzeugs 5 ausgesetzt. Auf zusätzliche, insbesondere separate Antivibrationselemente, die ausschließlich den Griff vom Gehäuse entkoppeln und/oder ausschließlich den Akku vom Gehäuse entkoppeln kann verzichtet werden. Dadurch ergibt sich ein einfacher und kostengünstiger Aufbau.

Das handgeführte Arbeitsgerät 1 nach dem zweiten und nach dem dritten Ausführungsbeispiel weist ein in den Figuren 5 und 7 dargestelltes viertes Antivibrationselement 27 auf. Das vierte Antivibrationselement 27 ist so angeordnet, dass es zwischen dem Gehäuse 6 und dem Führungsrohr 4 vibrationsentkoppelnd wirkt. Das vierte Antivibrationselement 27 ist auf der dem Werkzeug 5 zugewandten Seite 18 des Motors 2 angeordnet. Das vierte Antivibrationselement 27 ist bezüglich der Längsrichtung 49 zwischen dem Motor 2 und dem Werkzeug 5 angeordnet. Das vierte Antivibrationselement 19 lagert das Gehäuse 6 an einer vierten Lagerstelle 33 an dem Führungsrohr 4. Der Motor 2 ist zumindest mittelbar an der vierten Lagerstelle 33 gelagert. Auf der dem Werkzeug 5 zugewandten Seite 18 des Motors 2 ist der Motor 2 mittelbar sowohl an der dritten Lagerstelle 32 als auch an der vierten Lagerstelle 33 gelagert.

Wie in den Figuren 5 und 7 dargestellt, weist auch das handgeführte Arbeitsgerät 1 nach dem zweiten und dem dritten Ausführungsbeispiel ein drittes Antivibrationselement 19 auf. Die Beschreibung des dritten Antivibrationselements 19 zum ersten Ausführungsbeispiel trifft auch auf das zweite und das dritte Ausführungsbeispiel zu. Das dritte Antivibrationselement 19 verbindet den Motor 2 zumindest mittelbar vibrationsentkoppelt mit dem Gehäuse 6. Das dritte Antivibrationselement 19 ist auf der dem Werkzeug 5 abgewandten Seite 17 des Motors 2 angeordnet.

Das erste Antivibrationselement 7 und das vierte Antivibrationselement 27 liegen in einer ersten Ebene E1, wie in den Figuren 5 und 7 dargestellt. Die erste Ebene E1 erstreckt sich in Längsrichtung 49. Das zweite Antivibrationselement 9 und das dritte Antivibrationselement 19 liegen in einer zweiten Ebene E2. Die zweite Ebene E2 erstreckt sich in Längsrichtung 49. Das erste Antivibrationselement 7 und das vierte Antivibrationselement 27 sind bezüglich der Längsrichtung 49 auf derselben Höhe angeordnet. Das erste Antivibrationselement 7 und das vierte Antivibrationselement 27 liegen in einer Ebene, die senkrecht zur Längsrichtung 49 verläuft. Das zweite Antivibrationselement 9 und das dritte Antivibrationselement 19 sind bezüglich der Längsrichtung 49 auf derselben Höhe angeordnet. Das zweite Antivibrationselement 9 und das dritte Antivibrationselement 19 liegen in einer gemeinsamen Ebene, die senkrecht zur Längsrichtung 49 verläuft. Die erste Ebene E1 und die zweite Ebene E2 schließen einen Winkel α ein. Die erste Ebene E1 und die zweite Ebene E2 sind bezüglich der Längsrichtung 49 gegeneinander verkippt. Der Winkel α beträgt von 70° bis 110°. Im zweiten und im dritten Ausführungsbeispiel beträgt der Winkel α von 80° bis 100°.

Das dritte Ausführungsbeispiel nach den Figuren 6 und 7 unterscheidet sich vom zweiten Ausführungsbeispiel nach den Figuren 4 und 5 lediglich dadurch, dass im dritten Ausführungsbeispiel ein fünftes Antivibrationselement 28 vorgesehen ist. Das fünfte Antivibrationselement 28 ist bezüglich der Längsrichtung 49 zwischen dem ersten Antivibrationselement 7 und dem zweiten Antivibrationselement 9 angeordnet.

Das fünfte Antivibrationselement ist so angeordnet, dass es zwischen dem Gehäuse 6 und dem Führungsrohr 4 vibrationsentkoppelnd wirkt. Das fünfte Antivibrationselement 28 ist auf der dem Werkzeug 5 zugewandten Seite 18 des Motors 2 angeordnet. Das fünfte Antivibrationselement 28 umgreift das Führungsrohr 4. Das fünfte Antivibrationselement 28 läuft vollständig um das Führungsrohr 4 um. Das handgeführte Arbeitsgerät 1 nach dem dritten Ausführungsbeispiel weist zwischen dem Führungsrohr 4 und dem Gehäuse 6 einen Spalt 26 auf. Der Spalt 26 ist bezüglich der Längsrichtung 49 zwischen dem Motor 2 und der Eintrittsstelle 12 angeordnet. Das fünfte Antivibrationselement 28 dichtet den Spalt 26 ab. Dadurch ist der Teil des Gehäuses 6, in dem der Motor 2 angeordnet ist auf der dem Werkzeug 5 zugewandten Seite 18 des Motors 2 abgedichtet. Dadurch ist eine gute Kühlluftführung zur Kühlung des Motors 2 möglich. Das fünfte Antivibrationselement 28 wirkt in Richtung quer, insbesondere in Richtung senkrecht zur Längsrichtung 49. Das fünfte Antivibrationselement 28 verbindet das Führungsrohr 4 unmittelbar mit dem Gehäuse 6. Es kann aber auch vorgesehen sein, dass zwischen dem fünften Antivibrationselement 28 und dem Führungsrohr 4 zumindest ein Bauteil angeordnet ist, das fest mit dem Führungsrohr 4 verbunden ist, so dass das zumindest eine Bauteil gemeinsam mit dem Führungsrohr 4 schwingt. In diesem Fall ist das fünfte Antivibrationselement 28 mittelbar über das zumindest eine Bauteil mit dem Führungsrohr 4 verbunden. Es kann auch vorgesehen sein, dass zwischen dem Gehäuse 6 und dem fünften Antivibrationselement 28 zumindest ein Bauelement angeordnet ist, das fest mit dem Gehäuse 6 verbunden ist, so dass das zumindest eine Bauelement gemeinsam mit dem Führungsrohr 4 schwingt. In diesem Fall ist das fünfte Antivibrationselement 28 mittelbar über das zumindest eine Bauelement mit dem Führungsrohr 4 verbunden.

Die Beschreibung der Fig. 5 trifft auch auf die Fig. 7 zu. In Fig. 7 ist zusätzlich noch das fünfte Antivibrationselement 28 dargestellt.

Die schematische Fig. 2 zeigt nicht nur einen Schnitt entlang der Schnittlinie II-II aus Fig. 1, sondern auch einen Schnitt entlang der Schnittlinie II-II aus Fig. 6. Die Beschreibung zu Fig. 2 trifft auch auf das dritte Ausführungsbeispiel zu, wobei das in der Beschreibung als erstes Antivibrationselement 7 bezeichnete Antivibrationselement dem fünften Antivibrationselement 28 entspricht. Auch in Fig. 4 ist die Schnittlinie II-II eingezeichnet. Die Schnittdarstellung in Fig. 2 zeigt jedoch zusätzlich noch das erste Antivibrationselement 7 des ersten Ausführungsbeispiels, das im zweiten Ausführungsbeispiel an anderer Stelle angeordnet ist. Bis auf die Beschreibung zum ersten Antivibrationselement 7 trifft die Beschreibung der Fig. 2 auch auf das zweite Ausführungsbeispiel zu.

## Patentansprüche

1. Handgeführtes Arbeitsgerät umfassend einen Motor (2), eine Übertragungswelle (3), ein Werkzeug (5), ein Führungsrohr (4), ein Gehäuse (6), und ein erstes Antivibrationselement (7), wobei der Motor (2) über die Übertragungswelle (3) das Werkzeug (5) antreibt, wobei die Übertragungswelle (3) in dem Führungsrohr (4) aufgenommen ist, wobei der Motor (2) in dem Gehäuse (6) angeordnet ist, wobei das Werkzeug (5) an einem vorderen Längsende (10) des Führungsrohrs (4) angeordnet ist, wobei das Gehäuse (6) an einem hinteren Längsende (11) des Führungsrohrs (4) angeordnet ist, wobei das Gehäuse (6) das Führungsrohr (4) zumindest teilweise umgreift, wobei das Führungsrohr (4) aus dem Gehäuse (6) hervorsteht, wobei sich das Führungsrohr (4) an einer Eintrittsstelle (12) in das Gehäuse (6) in einer Längsrichtung (49) erstreckt, wobei das erste Antivibrationselement (7) so angeordnet ist, dass es zwischen dem Gehäuse (6) und dem Führungsrohr (4) vibrationsentkoppelnd wirkt, wobei das erste Antivibrationselement (7) auf der dem Werkzeug (5) zugewandten Seite (18) des Motors (2) angeordnet ist, **dadurch gekennzeichnet, dass** das handgeführte Arbeitsgerät (1) ein zweites Antivibrationselement (9) umfasst, dass das zweite Antivibrationselement (9) zumindest mittelbar den Motor (2) mit dem Gehäuse (6) vibrationsentkoppelt verbindet.

2. Handgeführtes Arbeitsgerät nach Anspruch 1,
**dadurch gekennzeichnet**, das zweite Antivibrationselement (9) in einem in Längsrichtung (49) gemessenen Elementabstand (e) zum ersten Antivibrationselement (7) angeordnet ist, dass das Gehäuse (6) eine in Längsrichtung (49) gemessene Gehäuselänge (1) aufweist, und dass der Elementabstand (e) mindestens 30%, insbesondere mindestens 40% der Gehäuselänge (1) beträgt.

3. Handgeführtes Arbeitsgerät nach Anspruch 1 oder 2,
**dadurch gekennzeichnet, dass** das zweite Antivibrationselement (9) zumindest mittelbar das Führungsrohr (4) vibrationsentkoppelt mit dem Gehäuse (6) verbindet.

4. Handgeführtes Arbeitsgerät nach einem der Ansprüche 1 bis 3,
**dadurch gekennzeichnet, dass** das zweite Antivibrationselement (9) auf der dem Werkzeug (5) abgewandten Seite (17) des Motors (2) angeordnet ist.

5. Handgeführtes Arbeitsgerät nach einem der Ansprüche 1 bis 4,
**dadurch gekennzeichnet, dass** in dem Gehäuse (6) ein Akku (20) zur Versorgung des Motors (2) mit Energie angeordnet ist.

6. Handgeführtes Arbeitsgerät nach Anspruch 5,
**dadurch gekennzeichnet, dass** das erste Antivibrationselement (7) zu dem Akku (20) einen in Längsrichtung (49) gemessenen Akkuabstand (a) aufweist, und dass der Elementabstand (e) mindestens 50% des Akkuabstands (a) beträgt.

7. Handgeführtes Arbeitsgerät nach Anspruch 6,
**dadurch gekennzeichnet, dass** der Akkuabstand (a) mindestens 100 mm, insbesondere mindestens 500 mm, insbesondere maximal 800 mm beträgt.

8. Handgeführtes Arbeitsgerät nach Anspruch 6 oder 7,
**dadurch gekennzeichnet, dass** der Akkuabstand (a) größer als der Elementabstand (e) ist.

9. Handgeführtes Arbeitsgerät nach einem der Ansprüche 5 bis 8,
**dadurch gekennzeichnet, dass** der Akku (20) derart mit dem Gehäuse (6) verbunden ist, dass der Akku (20) gemeinsam mit dem Gehäuse (6) mittels des zweiten Antivibrationselements (9) gegenüber dem Motor (2) vibrationsentkoppelt ist.

10. Handgeführtes Arbeitsgerät nach einem der Ansprüche 5 bis 9,
**dadurch gekennzeichnet, dass** der Akku (20) auf der dem Werkzeug (5) abgewandten Seite (17) des Motors (2) angeordnet ist.

11. Handgeführtes Arbeitsgerät nach einem der Ansprüche 1 bis 10,
**dadurch gekennzeichnet, dass** das Führungsrohr (4) zumindest mittelbar starr mit dem Motor (2) verbunden ist und/oder dass das Führungsrohr (4) und der Motor (2) über eine Verbindung verbunden sind, die frei von einem Antivibrationselement ist.

12. Handgeführtes Arbeitsgerät nach einem der Ansprüche 1 bis 11;
**dadurch gekennzeichnet, dass** der Motor (2) auf seiner dem Werkzeug (5) abgewandten Seite (17) an mindestens einer ersten Lagerstelle (13) und einer zweiten Lagerstelle (14) vibrationsentkoppelt mit dem Gehäuse (6) verbunden ist, dass die erste Lagerstelle (13) in einem ersten Radialabstand (r1) zu einer Abtriebswelle (21) des Motors (2) angeordnet ist, dass die zweite Lagerstelle (14) in einem zweiten Radialabstand (r2) zur Abtriebswelle (21) des Motors (2) angeordnet ist, dass der erste Radialabstand (r1) und der zweite Radialabstand (r2) jeweils mindestens so groß sind wie ein Radius (r) des Führungsrohrs (4), und dass die erste Lagerstelle (13) und die zweite Lagerstelle (14) mit einem Winkelabstand (Δ) bezüglich der Abtriebswelle (21) des Motors (2) zueinander angeordnet sind.

13. Handgeführtes Arbeitsgerät nach einem der Ansprüche 1 bis 12,
**dadurch gekennzeichnet, dass** das handgeführte Arbeitsgerät (1) ein drittes Antivibrationselement (19) aufweist, dass das dritte Antivibrationselement (19) zumindest mittelbar den Motor (2) mit dem Gehäuse (6) vibrationsentkoppelt verbindet, dass das dritte Antivibrationselement (19) auf der dem Werkzeug (5) abgewandten Seite (17) des Motors (2) angeordnet ist, dass das handgeführte Arbeitsgerät (1) ein viertes Antivibrationselement (27) aufweist, dass das vierte Antivibrationselement (27) so angeordnet ist, dass es zwischen dem Gehäuse (6) und dem Führungsrohr (4) vibrationsentkoppelnd wirkt, dass das ersten Antivibrationselement (7) und das vierte Antivibrationselement (27) in einer ersten Ebene (E1) liegen, die sich in Längsrichtung (49) erstreckt, dass das zweite Antivibrationselement (9) und das dritte Antivibrationselement (19) in einer zweiten Ebene (E2) liegen, die sich in Längsrichtung (49) erstreckt, und dass die erste Ebene (E1) und die zweite Ebene (E2) einen Winkel (α) von 70° bis 110°, insbesondere von 80° bis 100° einschließen.

14. Handgeführtes Arbeitsgerät nach einem der Ansprüche 1 bis 13,
**dadurch gekennzeichnet, dass** das handgeführte Arbeitsgerät (1) so ausgelegt ist, dass eine Übertragung von Vibrationen von der Übertragungswelle (3) auf das Gehäuse (6) nur über Antivibrationselemente (7, 9, 19, 27) gedämpft möglich ist.

15. Handgeführtes Arbeitsgerät nach einem der Ansprüche 1 bis 14,
**dadurch gekennzeichnet, dass** das das handgeführte Arbeitsgerät (1) einen Handgriff (8) umfasst, wobei der Handgriff (8) mit dem Gehäuse (6) verbunden ist, und dass der Handgriff (8) gemeinsam mit dem Gehäuse (6) sowohl gegenüber dem Führungsrohr (4) als auch gegenüber dem Motor (2) vibrationsentkoppelt ist.

16. Handgeführtes Arbeitsgerät nach einem der Ansprüche 1 bis 15,
**dadurch gekennzeichnet, dass** der Motor (2) mit dem Gehäuse (6) ausschließlich über zwischengeschaltete Antivibrationselemente (7, 9, 19, 27) verbunden ist, so dass Vibrationen vom Motor (2) auf das Gehäuse (6) nur über Antivibrationselemente (7, 9, 19, 27) gedämpft übertragbar sind.

## Claims

1. Hand-held working device comprising a motor (2), a transmission shaft (3), a tool (5), a guide tube (4), a housing (6), and a first anti-vibration element (7), wherein the motor (2) drives the tool (5) via the transmission shaft (3), wherein the transmission shaft (3) is received in the guide tube (4), wherein the motor (2) is arranged in the housing (6), wherein the tool (5) is arranged at a front longitudinal end (10) of the guide tube (4), wherein the housing (6) is arranged at a rear longitudinal end (11) of the guide tube (4), wherein the housing (6) at least partially surrounds the guide tube (4), wherein the guide tube (4) protrudes from the housing (6), wherein the guide tube (4) extends in a longitudinal direction (49) at an entry point (12) into the housing (6), wherein the first anti-vibration element (7) is arranged such that it acts in a vibration-decoupling manner between the housing (6) and the guide tube (4), wherein the first anti-vibration element (7) is arranged on the side (18) of the motor (2) facing the tool (5),
**characterized in that** the hand-held working device (1) comprises a second anti-vibration element (9), that the second anti-vibration element (9) connects the motor (2) to the housing (6) in a vibration-decoupling manner at least indirectly.

2. Hand-held working device according to claim 1,
**characterized in that** the second anti-vibration element (9) is arranged at an element spacing (e), measured in the longitudinal direction (49), from the first anti-vibration element (7), that the housing (6) has a housing length (1), measured in the longitudinal direction (49), and that the element spacing (e) amounts to at least 30%, in particular at least 40%, of the housing length (1).

3. Hand-held working device according to claim 1 or 2,
**characterized in that** the second anti-vibration element (9) connects the guide tube (4) to the housing (6) in a vibration-decoupling manner at least indirectly.

4. Hand-held working device according to one of claims 1 to 3,
**characterized in that** the second anti-vibration element (9) is arranged on the side (17) of the motor (2) facing away from the tool (5).

5. Hand-held working device according to one of claims 1 to 4,
**characterized in that** a battery (20) for supplying the motor (2) with energy is arranged in the housing (6).

6. Hand-held working device according to claim 5,
**characterized in that** the first anti-vibration element (7) has a battery spacing (a), measured in the longitudinal direction (49), from the battery (20), and that the element spacing (e) amounts to at least 50% of the battery spacing (a).

7. Hand-held working device according to claim 6,
**characterized in that** the battery spacing (a) amounts to at least 100 mm, in particular at least 500 mm, in particular at most 800 mm.

8. Hand-held working device according to claim 6 or 7,
**characterized in that** the battery spacing (a) is greater than the element spacing (e).

9. Hand-held working device according to one of claims 5 to 8,
**characterized in that** the battery (20) is connected to the housing (6) such that the battery (20), together with the housing (6), is vibration-decoupled relative to the motor (2) by means of the second anti-vibration element (9).

10. Hand-held working device according to one of claims 5 to 9,
**characterized in that** the battery (20) is arranged on the side (17) of the motor (2) facing away from the tool (5).

11. Hand-held working device according to one of claims 1 to 10,
**characterized in that** the guide tube (4) is connected rigidly to the motor (2) at least indirectly and/or that the guide tube (4) and the motor (2) are connected via a connection which is free of an anti-vibration element.

12. Hand-held working device according to one of claims 1 to 11;
**characterized in that** the motor (2) is connected to the housing (6) in a vibration-decoupling manner on its side (17) facing away from the tool (5) at at least one first bearing location (13) and one second bearing location (14), that the first bearing location (13) is arranged at a first radial spacing (r1) from an output shaft (21) of the motor (2), that the second bearing location (14) is arranged at a second radial spacing (r2) from the output shaft (21) of the motor (2), that the first radial spacing (r1) and the second radial spacing (r2) are each at least as large as a radius (r) of the guide tube (4), and that the first bearing location (13) and the second bearing location (14) are arranged relative to one another at an angular spacing (Δ) with respect to the output shaft (21) of the motor (2).

13. Hand-held working device according to one of claims 1 to 12,
**characterized in that** the hand-held working device (1) comprises a third anti-vibration element (19), that the third anti-vibration element (19) connects the motor (2) to the housing (6) in a vibration-decoupling manner at least indirectly, that the third anti-vibration element (19) is arranged on the side (17) of the motor (2) facing away from the tool (5), that the hand-held working device (1) comprises a fourth anti-vibration element (27), that the fourth anti-vibration element (27) is arranged such that it acts in a vibration-decoupling manner between the housing (6) and the guide tube (4), that the first anti-vibration element (7) and the fourth anti-vibration element (27) lie in a first plane (E1) extending in the longitudinal direction (49), that the second anti-vibration element (9) and the third anti-vibration element (19) lie in a second plane (E2) extending in the longitudinal direction (49), and that the first plane (E1) and the second plane (E2) enclose an angle (α) of 70° to 110°, in particular of 80° to 100°.

14. Hand-held working device according to one of claims 1 to 13,
**characterized in that** the hand-held working device (1) is designed such that a transmission of vibrations from the transmission shaft (3) to the housing (6) is possible only in damped manner via anti-vibration elements (7, 9, 19, 27).

15. Hand-held working device according to one of claims 1 to 14,
**characterized in that** the hand-held working device (1) comprises a handle (8), wherein the handle (8) is connected to the housing (6), and that the handle (8), together with the housing (6), is vibration-decoupled both relative to the guide tube (4) and relative to the motor (2).

16. Hand-held working device according to one of claims 1 to 15,
**characterized in that** the motor (2) is connected to the housing (6) exclusively via interposed anti-vibration elements (7, 9, 19, 27), such that vibrations from the motor (2) to the housing (6) are transmissible in damped manner only via anti-vibration elements (7, 9, 19, 27).

## Revendications

1. Appareil de travail portatif comprenant un moteur (2), un arbre de transmission (3), un outil (5), un tube de guidage (4), un boîtier (6) et un premier élément antivibratoire (7), le moteur (2) entraînant l'outil (5) via l'arbre de transmission (3), l'arbre de transmission (3) étant logé dans le tube de guidage (4), le moteur (2) étant disposé dans le boîtier (6), l'outil (5) étant disposé à une extrémité longitudinale avant (10) du tube de guidage (4), le boîtier (6) étant disposé à une extrémité longitudinale arrière (11) du tube de guidage (4), le boîtier (6) entourant au moins partiellement le tube de guidage (4), le tube de guidage (4) faisant saillie hors du boîtier (6), le tube de guidage (4) s'étendant, en un point d'entrée (12) dans le boîtier (6), dans une direction longitudinale (49), le premier élément antivibratoire (7) étant disposé de manière à agir en découplage vibratoire entre le boîtier (6) et le tube de guidage (4), le premier élément antivibratoire (7) étant disposé du côté (18) du moteur (2) orienté vers l'outil (5), **caractérisé en ce que** l'appareil de travail portatif (1) comprend un deuxième élément antivibratoire (9), **en ce que** le deuxième élément antivibratoire (9) relie, au moins indirectement, le moteur (2) au boîtier (6) en découplage vibratoire.

2. Appareil de travail portatif selon la revendication 1,
**caractérisé en ce que** le deuxième élément antivibratoire (9) est disposé à une distance d'élément (e), mesurée dans la direction longitudinale (49), par rapport au premier élément antivibratoire (7), **en ce que** le boîtier (6) présente une longueur de boîtier (1), mesurée dans la direction longitudinale (49), et **en ce que** la distance d'élément (e) représente au moins 30 %, en particulier au moins 40 %, de la longueur de boîtier (1).

3. Appareil de travail portatif selon la revendication 1 ou 2,
**caractérisé en ce que** le deuxième élément antivibratoire (9) relie, au moins indirectement, le tube de guidage (4) au boîtier (6) en découplage vibratoire.

4. Appareil de travail portatif selon l'une des revendications 1 à 3,
**caractérisé en ce que** le deuxième élément antivibratoire (9) est disposé du côté (17) du moteur (2) opposé à l'outil (5).

5. Appareil de travail portatif selon l'une des revendications 1 à 4,
**caractérisé en ce qu'**un accumulateur (20) destiné à l'alimentation en énergie du moteur (2) est disposé dans le boîtier (6).

6. Appareil de travail portatif selon la revendication 5,
**caractérisé en ce que** le premier élément antivibratoire (7) présente par rapport à l'accumulateur (20) une distance d'accumulateur (a), mesurée dans la direction longitudinale (49), et **en ce que** la distance d'élément (e) représente au moins 50 % de la distance d'accumulateur (a).

7. Appareil de travail portatif selon la revendication 6,
**caractérisé en ce que** la distance d'accumulateur (a) est d'au moins 100 mm, en particulier d'au moins 500 mm, en particulier d'au plus 800 mm.

8. Appareil de travail portatif selon la revendication 6 ou 7,
**caractérisé en ce que** la distance d'accumulateur (a) est supérieure à la distance d'élément (e).

9. Appareil de travail portatif selon l'une des revendications 5 à 8,
**caractérisé en ce que** l'accumulateur (20) est relié au boîtier (6) de telle sorte que l'accumulateur (20), conjointement avec le boîtier (6), est découplé vibratoirement par rapport au moteur (2) au moyen du deuxième élément antivibratoire (9).

10. Appareil de travail portatif selon l'une des revendications 5 à 9,
**caractérisé en ce que** l'accumulateur (20) est disposé du côté (17) du moteur (2) opposé à l'outil (5).

11. Appareil de travail portatif selon l'une des revendications 1 à 10,
**caractérisé en ce que** le tube de guidage (4) est relié au moins indirectement de manière rigide au moteur (2) et/ou **en ce que** le tube de guidage (4) et le moteur (2) sont reliés par une connexion dépourvue d'élément antivibratoire.

12. Appareil de travail portatif selon l'une des revendications 1 à 11,
**caractérisé en ce que** le moteur (2), sur son côté (17) opposé à l'outil (5), est relié au boîtier (6) en découplage vibratoire en au moins un premier point de palier (13) et un deuxième point de palier (14), **en ce que** le premier point de palier (13) est disposé à une première distance radiale (r1) par rapport à un arbre de sortie (21) du moteur (2), **en ce que** le deuxième point de palier (14) est disposé à une deuxième distance radiale (r2) par rapport à l'arbre de sortie (21) du moteur (2), **en ce que** la première distance radiale (r1) et la deuxième distance radiale (r2) sont chacune au moins aussi grandes qu'un rayon (r) du tube de guidage (4), et **en ce que** le premier point de palier (13) et le deuxième point de palier (14) sont disposés l'un par rapport à l'autre avec un écart angulaire (Δ) par rapport à l'arbre de sortie (21) du moteur (2).

13. Appareil de travail portatif selon l'une des revendications 1 à 12,
**caractérisé en ce que** l'appareil de travail portatif (1) comporte un troisième élément antivibratoire (19), **en ce que** le troisième élément antivibratoire (19) relie, au moins indirectement, le moteur (2) au boîtier (6) en découplage vibratoire, **en ce que** le troisième élément antivibratoire (19) est disposé du côté (17) du moteur (2) opposé à l'outil (5), **en ce que** l'appareil de travail portatif (1) comporte un quatrième élément antivibratoire (27), **en ce que** le quatrième élément antivibratoire (27) est disposé de manière à agir en découplage vibratoire entre le boîtier (6) et le tube de guidage (4), **en ce que** le premier élément antivibratoire (7) et le quatrième élément antivibratoire (27) se trouvent dans un premier plan (E1) s'étendant dans la direction longitudinale (49), **en ce que** le deuxième élément antivibratoire (9) et le troisième élément antivibratoire (19) se trouvent dans un deuxième plan (E2) s'étendant dans la direction longitudinale (49), et **en ce que** le premier plan (F1) et le deuxième plan (E2) forment un angle (α) de 70° à 110°, en particulier de 80° à 100°.

14. Appareil de travail portatif selon l'une des revendications 1 à 13,
**caractérisé en ce que** l'appareil de travail portatif (1) est conçu de sorte qu'une transmission de vibrations de l'arbre de transmission (3) au boîtier (6) n'est possible de manière amortie que par des éléments antivibratoires (7, 9, 19, 27).

15. Appareil de travail portatif selon l'une des revendications 1 à 14,
**caractérisé en ce que** l'appareil de travail portatif (1) comprend une poignée (8), la poignée (8) étant reliée au boîtier (6), et **en ce que** la poignée (8), conjointement avec le boîtier (6), est découplée vibratoirement tant par rapport au tube de guidage (4) que par rapport au moteur (2).

16. Appareil de travail portatif selon l'une des revendications 1 à 15, **caractérisé en ce que** le moteur (2) est relié au boîtier (6) exclusivement par l'intermédiaire d'éléments antivibratoires interposés (7, 9, 19, 27), de sorte que des vibrations du moteur (2) au boîtier (6) ne sont transmissibles de manière amortie que par des éléments antivibratoires (7, 9, 19, 27).
